# EUROPÄISCHE PATENTSCHRIFT

(11) **EP 2 092 013 B1**
(45) Veröffentlichungstag und Bekanntmachung des Hinweises auf die Patenterteilung: **12.12.2018**
(21) Anmeldenummer: 07821036.6
(22) Anmeldetag: 09.10.2007
(51) Int. Cl.: C08L 15/00, C08L 21/00, C08K 3/36, C08K 5/548, B60C 1/00

(54) **KAUTSCHUKMISCHUNG UND REIFEN**
RUBBER MIXTURE AND TIRES
MÉLANGE DE CAOUTCHOUC ET PNEUS

(30) Priorität: 15.11.2006 DE 102006053725
(43) Veröffentlichungstag der Anmeldung: 26.08.2009
(73) Patentinhaber: Continental Reifen Deutschland GmbH, 30165 Hannover (DE)
(72) Erfinder: RECKER, Carla, 30167 Hannover (DE); WAGEMANN, Jürgen, 31162 Bad Salzdetfurth (DE); ALBERS, Isabel, Oxfortshire OX 14 30B (GB); HERZOG, Katharina, 31135 Hildesheim (DE); LASCHET, Marc, 30163 Hannover (DE); SCHULZE, Herbert, 21335 Lüneburg (DE)
(74) Vertreter: Finger, Karsten
(86) Internationale Anmeldenummer: PCT/EP2007/060663
(87) Internationale Veröffentlichungsnummer: WO 2008/058813

(56) Entgegenhaltungen:
- EP-A- 0 775 725
- EP-A- 1 535 959
- US-A1- 2006 173 134

## Beschreibung

Die Erfindung betrifft eine schwefelvernetzbare Kautschukmischung, insbesondere für den Laufstreifen von Fahrzeugluftreifen, enthaltend zumindest ein teilweise hydriertes lösungspolymerisiertes Styrol-Butadien-Copolymer, zumindest einen weiteren Dienkautschuk, Kieselsäure und zumindest ein Silan-Kupplungsagens. Die Erfindung betrifft ferner einen Fahrzeugluftreifen mit einem Laufstreifen, der zumindest zum Teil aus einer solchen, mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt, so ist eine Verbesserung des Verhaltens auf nasser Fahrbahn üblicherweise mit einer Verschlechterung des Rollwiderstandes verbunden. An Laufstreifenmischungen für PKW- und Van-Reifen werden beispielsweise höchste Anforderungen hinsichtlich des ABS-Nass- und Trockenbremsens, des Abriebwiderstands, des Rollwiderstands, der Haltbarkeit und des Handlings, insbesondere auf trockener Fahrbahn, gestellt.

Um Reifeneigenschaften wie Abrieb, Nassrutschverhalten und Rollwiderstand zu beeinflussen, ist es z. B. bekannt, lösungspolymerisierte Styrol-Butadien-Copolymere mit unterschiedlicher Struktur einzusetzen. Styrol-Butadien-Copolymere lassen sich modifizieren, indem z. B. die Styrol- und Vinyl-Anteil, Endgruppenmodifizierungen, Kopplungen oder Hydrierungen vorgenommen werden. Die verschiedenen Copolymertypen haben unterschiedlichen Einfluss auf die Vulkanisat und damit auch auf die Reifeneigenschaften.

In der EP 0 302 505 B1 werden rußhaltige Kautschukmischungen für Reifen mit gutem Nassgriff und niedrigem Rollwiderstand beschrieben, die teilweise hydrierte lösungspolymerisierte Styrol-Butadien-Copolymere enthalten.

Aus der EP 0 775 725 B1 ist es bekannt, Kautschukmischungen für Reifen mit gutem Nassgriff, guter Verarbeitbarkeit und geringem Rollwiderstand bereitzustellen, die partiell hydrierte Styrol-Butadien-Copolymere, Kieselsäure und Silan-Kupplungsagenzien enthalten. Die in der EP 0 775 725 B1 offenbarten Styrol-Butadien-Copolymere weisen bei Styrolgehalten von mehr als 37 Gew.-% nur einen Hydrierungsgrad von 25 % auf.

Hydrierte Styrol-Butadien-Copolymere für Reifenkautschukmischungen sind auch bekannt aus der EP 1 535 959 A2 und der US 2006/0173134 A1.

Ausgehend von diesem Stand der Technik liegt der Erfindung die Aufgabe zugrunde, Kautschukmischungen für die Laufstreifen von Fahrzeugluftreifen bereitzustellen, die beim Reifen eine weitere Verbesserung hinsichtlich des Konfliktes zwischen den sich gegensätzlich verhaltenden Eigenschaften Nassgriff und Rollwiderstand bewirken.

Gelöst wird diese Aufgabe erfindungsgemäß dadurch, dass die Kautschukmischung
- 30 - 80 phr (Gewichtsteile, bezogen auf 100 Gewichtsteile der gesamten Kautschuke in der Mischung) zumindest eines teilweise hydrierten lösungspolymerisierten Styrol-Butadien-Copolymers, das einen Styrol-Anteil von mehr als 37 Gew.-% und einen Hydrierungsgrad von mehr als 30 % aufweist,
- 20 - 70 phr zumindest eines weiteren Dienkautschuks,
- 50 - 110 phr zumindest einer Kieselsäure und
- 1 - 15 phr zumindest eines Silan-Kupplungsagenzes,
- wobei sie 20 bis 70 phr cis-Polybutadien enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Unter Hydrierungsgrad eines Kautschukes ist dabei das Verhältnis der hydrierten Doppelbindungen zur den nicht hydrierten Doppelbindungen zu verstehen. Aromatische Doppelbindungen der Styrolbausteine werden dabei nicht berücksichtigt.

Überraschenderweise wurde gefunden, dass durch den Einsatz eines hydrierten lösungspolymerisierten Styrol-Butadien-Copolymers mit einem hohen Styrol-Anteil von mehr als 37 Gew.-% und einem Hydrierungsgrad von mehr als 30 % in Kieselsäuremischungen die Eigenschaften Nassgriff und Rollwiderstand auf ein besseres Niveau gebracht werden können.

Die schwefelvernetzbare Kautschukmischung enthält 30 - 80 phr zumindest eines teilweise hydrierten lösungspolymerisierten Styrol-Butadien-Copolymers mit einem Styrol-Anteil von mehr als 37 Gew.-% und einen Hydrierungsgrad von mehr als 30 %, die nach dem Fachmann bekannten Polymerisations- und Hydrierungsverfahren hergestellt werden können. Es können auch mehrere hydrierten lösungspolymerisierten Styrol-Butadien-Copolymere im Verschnitt eingesetzt werden.

Ein besonders ausgewogenes Verhältnis von Nassgriff und Rollwiderstand lässt sich erzielen, wenn das teilweise hydrierte lösungspolymerisierte Styrol-Butadien-Copolymer einen Styrol-Anteil von 37 bis 50 Gew.-% und einen Hydrierungsgrad von 33 bis 80 % aufweist. Bei diesen Hydrierungsgraden wird auch eine besonders gute Kompatibilisierbarkeit mit Polybutadien erzielt.

Die erfindungsgemäße Kautschukmischung enthält weiterhin 20 - 70 phr zumindest eines weiteren Dienkautschuks. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und weiteren Styrol-Butadien-Copolymeren (SBR). Diese Dienelastomere lassen sich gut zu der Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%. Vorzugsweise enthält die Kautschukmischung 10 bis 50 phr Naturkautschuk.

Enthält die Kautschukmischung als Dienkautschuk Polybutadien (BR), kann es sich dabei sowohl um cis-1,4- als auch um Vinyl-Polybutadien (40-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.
Die Kautschukmischung enthält 20 bis 70 phr cis-Polybutadien.

Die Verblendung von Kautschukmischungen mit cis-Polybutadien wird durchgeführt, um die Glasübergangstemperatur der Mischung zu senken und dadurch die Wintereigenschaften (Eis- und Schneegriff) des Reifens zu verbessern. Dabei war bislang der Styrol-Anteil des mit dem cis-Polybutadien zu verblendenden lösungspolmerisierten Styrol-Butadien-Copolymers auf ca. 35 Gew.-% beschränkt. Bei höheren Styrol-Anteilen nimmt die Kompatibilität der beiden Kautschuktypen stark ab, so dass dann wieder eine Mischung mit hoher Glasübergangstemperatur resultiert, die für den Einsatz als Winterreifen ungeeignet ist. Man verwendet daher für Winterreifenmischungen üblicherweise lösungspolmerisierte Styrol-Butadien-Copolymere mit geringem Styrol-Anteil und hohem Vinyl-Anteil, die auf Grund einer geringeren Kettensteifigkeit die Glasübergangstemperatur nicht stark erhöhen, aber den Konflikt zwischen Nassgriff und Rollwiderstand nicht optimal lösen.
Es wurde aber gefunden, dass ein mit cis-Polybutadien wenig kompatibles lösungspolmerisiertes Styrol-Butadien-Copolymer mit einem hohen Styrol-Anteil von mehr als 37 Gew.-% durch die teilweise Hydrierung der Doppelbindungen ab einem Hydrierungsgrad von mehr als 30 % überraschenderweise gut kompatibilisierbar wird. Ferner wird die Kettensteifigkeit des lösungspolymerisierten Styrol-Butadien-Copolymers verringert. Gemäß einer bevorzugten Weiterbildung der Erfindung kann daher durch das Verblenden der Mischung gemäß Anspruch 1 mit 20 bis 70 phr cis-Polybutadien eine Kautschukmischung erhalten werden, die bei gleicher Glasübergangstemperatur der Mischung die Zielkonflikte Nassgriff und Rollwiderstand sowie Nassgriff und Wintereigenschaften löst.

Bei den weiteren Styrol-Butadien-Copolymeren handelt es sich um solche, die nicht unter die teilweise hydrierten lösungspolymerisierten Typen gemäß Anspruch 1 fallen. Es kann sich z. B. um lösungspolymerisierte Styrol-Butadien-Copolymere mit geringerem Styrol-Anteil oder geringerem Hydrierungsgrad handeln. Die S-SBR können auch gekoppelt, z. B. mit Zinn, sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Die Kautschukmischung enthält 50 - 110 phr zumindest einer Kieselsäure. Es können alle dem Fachmann für die Reifenindustrie bekannten Kieselsäuren eingesetzt werden.

Zur Verbesserung der Verarbeitbarkeit und zur Anbindung der Kieselsäure und anderer ggf. vorhandener polarer Füllstoffe an den Dienkautschuk wird zumindest ein Silan-Kupplungsagens in Mengen von 1 - 15 phr in der Kautschukmischung eingesetzt. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden.

Als weitere Füllstoffe kann die Kautschukmischung neben der Kieselsäure auch noch Ruße, Aluminiumhydroxid, Schichtsilikate, Kreide, Stärke, Magnesiumoxid, Titandioxid, Kautschukgele, Kurzfasern usw. in beliebigen Kombinationen enthalten.

Neben den bereits genannten Inhaltsstoffen kann die Kautschukmischung weitere in der Kautschukindustrie übliche Zusatzstoffe wie z. B. Weichmacher, Alterungsschutzmittel, Aktivatoren, wie z. B. Zinkoxid und Fettsäuren (z. B. Stearinsäure), Wachse und Mastikationshilfsmittel in üblichen Gewichtsteilen enthalten.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht. Bevorzugt wird die Mischung in die Form eines Laufstreifens gebracht und bei der Herstellung des Fahrzeugluftreifenrohlings wie bekannt aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung soll nun anhand von Vergleichs- und Ausführungsbeispielen, die in den Tabellen 1 und 2 zusammengefasst sind, näher erläutert werden.

Bei sämtlichen in den Tabellen enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet. Die Mischungen 1 bis 4 und 5 bis 8 unterscheiden sich nur in der Art der eingesetzten lösungspolmerisierten Styrol-Butadien-Copolymere.

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die Tests an Prüfkörpern wurden folgende Testverfahren angewandt:
- Shore-A-Härte bei Raumtemperatur und 70 °C gemäß DIN 53 505
- Rückprallelastizität bei Raumtemperatur und 70 °C gemäß DIN 53 512
- Zugfestigkeit bei Raumtemperatur gemäß DIN 53 504
- Reißdehnung bei Raumtemperatur gemäß DIN 53 504
- Spannungswerte bei 50 und 100% statischer Dehnung bei Raumtemperatur gemäß DIN 53 504
- Glasübergangstemperatur aus dem im Verlustmodul auftretenden Maiximum gemäß DIN 53 513 aus Messung mit Variation der Temperatur bei dynamischer Verformungsamplitude von 0,2 % bei 10 % Vorverformung und 10 Hz
- mittlerer dynamischer Speichermodul E' zwischen -25 und -5 °C gemäß DIN 53 513 aus Messung mit Variation der Temperatur bei dynamischer Verformungsamplitude von 0,2 % bei 10 % Vorverformung und 10 Hz

**Tabelle 1**

| **Bestandteile** | **Einheit** | **1(V)** | **2(V)** | **3(E)** | **4(E)** |
|---|---|---|---|---|---|
| cis-Polybutadien | phr | 23 | 23 | 23 | 23 |
| S-SBR Typ A^{a} | phr | 77 | - | - | - |
| S-SBR Typ B^{b} | phr | - | 77 | - | - |
| S-SBR Typ C^{c} | phr | - | - | 77 | - |
| S-SBR Typ D^{d} | phr | - | - | | 77 |
| Kieselsäure^{e} | phr | 95 | 95 | 95 | 95 |
| Weichmacher | phr | 35 | 35 | 35 | 35 |
| Silan-Kupplungsagens^{f} | phr | 8,1 | 8,1 | 8,1 | 8,1 |
| Alterungsschutzmittel | phr | 4 | 4 | 4 | 4 |
| Ozonschutzwachs | phr | 2 | 2 | 2 | 2 |
| Zinkoxid | phr | 2,5 | 2,5 | 2,5 | 2,5 |
| Stearinsäure | phr | 2,5 | 2,5 | 2,5 | 2,5 |
| Beschleuniger | phr | 4 | 4 | 4 | 4 |
| Schwefel | phr | 2 | 2 | 2 | 2 |

| **Eigenschaften** | | | | | |
|---|---|---|---|---|---|
| Härte bei RT | Shore A | 70,3 | 71,7 | 71,4 | 72,2 |
| Härte bei 70 °C | Shore A | 67,5 | 68,2 | 68,9 | 70,6 |
| Rüpra. bei RT | % | 24,0 | 15,8 | 20,7 | 21,0 |
| Rüpra. bei 70 °C | % | 43,6 | 40,2 | 45,4 | 44,4 |
| Zugfestigkeit bei RT | MPa | 13,6 | 15,6 | 16,2 | 18,7 |
| Reißdehnung bei RT | % | 414 | 452 | 427 | 491 |
| Spannungswert 50 % | MPa | 1,45 | 1,37 | 1,46 | 1,53 |
| Spannungswert 100 % | MPa | 2,5 | 2,2 | 2,55 | 2,58 |
| Glasübergangstemperatur | °C | -35,0 | -24,9 | -36,8 | -36,8 |

| | | | | | |
|---|---|---|---|---|---|
| ^{a}NS 116 R, Nippon Zeon, Japan, Vinyl-Anteil: 67 Gew.-%, Styrol-Anteil: 22 Gew.-%, ^{b}lösungspolymerisiertes Styrol-Butadien-Copolymer, Styrol-Anteil: 38 Gew.-%, Hydrierungsgrad: 0 % teilweise hydriertes lösungspolymerisiertes Styrol-Butadien-Copolymer, Styrol-Anteil: 38 Gew.-%, Hydrierungsgrad: 35 % ^{d}teilweise hydriertes lösungspolymerisiertes Styrol-Butadien-Copolymer, Styrol-Anteil: 38 Gew.-%, Hydrierungsgrad: 67 % ^{e}VN3, Degussa AG, Deutschland, Stickstoff-Oberfläche: 175 m²/g, CTAB-Oberfläche: 160 m²/g ^{f}Silquest® A 1589, General Electric Speciality, USA | | | | | |

Aus den Daten der Tabelle 1 wird ersichtlich, dass nur bei Anwesenheit eines hydrierten lösungspolymerisierten Styrol-Butadien-Copolymers mit einem Hydrierungsgrad von mehr als 30 %, wie die Mischungen 3(E) und 4(E) es zeigen, die Rückprallelastizität bei Raumtemperatur im Vergleich zur Referenzmischung 1(V) gesenkt und gleichzeitig die Rückprallelastizität bei 70 °C erhöht werden kann, ohne dass die Glasübergangstemperatur steigt. Die Rückprallelastizität bei Raumtemperatur dient als Maß für den Nassgriff, wobei kleinere Werte in einem verbesserten Nassgriff resultieren. Die Rückprallelastizität bei 70 °C dient hingegen als Indikator für den Rollwiderstand, wobei ein erhöhter Wert mit einer Erniedrigung, d. h. Verbesserung, des Rollwiderstandes einhergeht. So zeichnen sich die Mischungen 3(E) und 4(E) bei Verwendung der Mischung als Reifenlaufstreifen durch ein gutes Nassgriff- und Rollwiderstandsverhalten bei im Vergleich zu Mischung 1(V) nahezu gleicher Glasübergangstemperatur aus. Mischung 2(V) mit nicht hydriertem Styrol-Butadien-Copolymer zeigt hingegen einen höheren Rollwiderstand und eine deutlich erhöhte Glasübergangstemperatur.

**Tabelle 2**

| **Bestandteile** | **Einheit** | **5(V)** | **6(V)** | **7(E)** | **8(E)** |
|---|---|---|---|---|---|
| Naturkautschuk | phr | 20 | 20 | 20 | 20 |
| cis-Polybutadien | phr | 44 | 44 | 44 | 44 |
| S-SBR Typ A^{a} | phr | 36 | - | - | - |
| S-SBR Typ B^{b} | phr | - | 36 | - | - |
| S-SBR Typ C^{c} | phr | - | - | 36 | - |
| S-SBR Typ D^{d} | phr | - | - | - | 36 |
| Kieselsäure^{e} | phr | 95 | 95 | 95 | 95 |
| Weichmacher | phr | 45 | 45 | 45 | 45 |
| Silan-Kupplungsagens^{f} | phr | 6,7 | 6,7 | 6,7 | 6,7 |
| Alterungsschutzmittel | phr | 4 | 4 | 4 | 4 |
| Ozonschutzwachs | phr | 2 | 2 | 2 | 2 |
| Zinkoxid | phr | 2,5 | 2,5 | 2,5 | 2,5 |
| Stearinsäure | phr | 2,5 | 2,5 | 2,5 | 2,5 |
| Beschleuniger | phr | 3,6 | 3,6 | 3,6 | 3,6 |
| Schwefel | phr | 2 | 2 | 2 | 2 |

| Eigenschaften | | | | | |
|---|---|---|---|---|---|
| Härte bei RT | Shore A | 67,3 | 62,9 | 63,3 | 62,9 |
| Härte bei 70 °C | Shore A | 60,9 | 59,3 | 59,1 | 58,5 |
| Rüpra. bei RT | % | 33,8 | 27,4 | 31,2 | 32,6 |
| Rüpra. bei 70 °C | % | 45,0 | 42,8 | 45,2 | 46,0 |
| Zugfestigkeit bei RT | MPa | 14,9 | 16,1 | 16,3 | 15,6 |
| Reißdehnung bei RT | % | 590 | 681 | 700 | 683 |
| Spannungswert 50 % | MPa | 1,06 | 1,02 | 0,98 | 0,98 |
| Spannungswert 100 % | MPa | 1,74 | 1,63 | 1,59 | 1,56 |
| Glasübergangstemperatur | °C | -67,6 | -60,1 | -68,5 | -64,6 |
| E' (-25) °C bis (-5) °C | MPa | 36,342 | 68,245 | 37,563 | 37,020 |

| | | | | | |
|---|---|---|---|---|---|
| ^{a}NS 116 R, Nippon Zeon, Japan, Vinyl-Anteil: 67 Gew.-%, Styrol-Anteil: 22 Gew.-%, ^{b} lösungspolymerisiertes Styrol-Butadien-Copolymer, Styrol-Anteil: 38 Gew.-%, Hydrierungsgrad: 0 % ^{c}teilweise hydriertes lösungspolymerisiertes Styrol-Butadien-Copolymer, Styrol-Anteil: 38 Gew.-%, Hydrierungsgrad: 35 % ^{d}teilweise hydriertes lösungspolymerisiertes Styrol-Butadien-Copolymer, Styrol-Anteil: 38 Gew.-%, Hydrierungsgrad: 67 % ^{e}VN3, Degussa AG, Deutschland, Stickstoff-Oberfläche: 175 m²/g, CTAB-Oberfläche: 160 m²/g ^{f}Silquest® A 1589, General Electric Speciality, USA | | | | | |

Auch aus der Tabelle 2 wird ersichtlich, dass auch bei einer typischen Winterreifenmischung mit den hydrierten Varianten des lösungspolymerisierten Styrol-Butadien-Copolymers Nassgriff und Rollwiderstand voreinander entkoppelt und verbessert werden können, wobei gleichzeitig die Wintereigenschaften nicht negativ beeinflusst werden. Der Speichermodul E' zwischen -25 und -5 °C dient dabei ebenso als Maß für den Eisgriff, wobei ein verringerter Speichermodul mit der Verbesserung des Eisgriffs gleichgesetzt wird.

## Patentansprüche

1. Schwefelvernetzbare Kautschukmischung, insbesondere für den Laufstreifen von Fahrzeugluftreifen, enthaltend
- 30 - 80 phr (Gewichtsteile, bezogen auf 100 Gewichtsteile der gesamten Kautschuke in der Mischung) zumindest eines teilweise hydrierten lösungspolymerisierten Styrol-Butadien-Copolymers, das einen Styrol-Anteil von mehr als 37 Gew.-% und einen Hydrierungsgrad von mehr als 30 % aufweist,
- 20 - 70 phr zumindest eines weiteren Dienkautschuks,
- 50 - 110 phr zumindest einer Kieselsäure und
- 1 - 15 phr zumindest eines Silan-Kupplungsagenzes. wobei sie 20 - 70 phr cis-Polybutadien enthält.

2. Kautschukmischung nach Anspruch 1, **dadurch gekennzeichnet, dass** das teilweise hydrierte lösungspolymerisierte Styrol-Butadien-Copolymer einen Styrol-Anteil von 37 bis 50 Gew.-% und einen Hydrierungsgrad von 33 bis 80 % aufweist.

3. Kautschukmischung nach Anspruch 1 oder 2, **dadurch gekennzeichnet, dass** der weitere Dienkautschuk ausgewählt ist aus der Gruppe, bestehend aus Naturkautschuk, synthetischem Polyisopren, Polybutadien und weiteren Styrol-Butadien-Copolymeren.

4. Kautschukmischung nach zumindest einem der vorhergehenden Ansprüche, **dadurch gekennzeichnet, dass** sie 10 - 50 phr Naturkautschuk enthält.

5. Fahrzeugluftreifen mit einem Laufstreifen, der zumindest zum Teil aus einer mit Schwefel vulkanisierten Kautschukmischung nach einem der Ansprüche 1 bis 4 besteht.

## Claims

1. Sulfur-crosslinkable rubber mixture, in particular for the tread of vehicle tires, containing:
- 30 - 80 phr (parts by weight, based on 100 parts by weight of the total rubbers in the mixture) of at least one partially hydrogenated solution-polymerized styrene-butadiene copolymer which has a styrene fraction of more than 37 % by weight and a degree of hydrogenation of more than 30%,
- 20 - 70 phr of at least one further diene rubber,
- 50 - 110 phr of at least one silica and
- 1 - 15 phr of at least one silane coupling agent,
which contains 20 - 70 phr of cis-polybutadiene.

2. Rubber mixture according to Claim 1, **characterized in that** the partially hydrogenated solution-polymerized styrene-butadiene copolymer has a styrene fraction of 37 to 50% by weight and a degree of hydrogenation of 33 to 80%.

3. Rubber mixture according to Claim 1 or 2, **characterized in that** the further diene rubber is selected from the group consisting of natural rubber, synthetic polyisoprene, polybutadiene and further styrene-butadiene copolymers.

4. Rubber mixture according to at least one of the preceding claims, **characterized in that** it contains 10 - 50 phr of natural rubber.

5. Pneumatic vehicle tire having a tread which at least partly comprises a sulfur-vulcanized rubber mixture according to any of Claims 1 to 4.

## Revendications

1. Composition de caoutchouc réticulable au soufre, en particulier pour la bande de roulement de pneumatiques à air pour véhicules, contenant
- 30 - 80 phr (parties en poids par rapport à 100 parties en poids de l'ensemble des caoutchoucs dans la composition) d'au moins un copolymère styrène-butadiène partiellement hydrogéné polymérisé en solution qui a une teneur en styrène de plus de 37 % en poids et un degré d'hydrogénation de plus de 30 %,
- 20 - 70 phr d'au moins un autre caoutchouc diène,
- 50 - 110 phr d'au moins un acide silicique et
- 1 - 15 phr d'au moins un réactif de couplage silane,
la composition contenant 20-70 phr de cispolybutadiène.

2. Composition de caoutchouc selon la revendication 1, **caractérisée en ce que** le copolymère styrène-butadiène partiellement hydrogéné polymérisé en solution présente une teneur en styrène de 37 à 50 % en poids et un degré d'hydrogénation de de 33 à 80 %.

3. Composition de caoutchouc selon la revendication 1 ou 2, **caractérisée en ce que** l'autre caoutchouc diène est choisi dans le groupe consistant en le caoutchouc naturel, le polyisoprène synthétique, le polybutadiène et des autres copolymères styrène-butadiène.

4. Composition de caoutchouc selon au moins l'une des revendications précédentes, **caractérisée en ce qu'**elle contient 10 - 50 phr de caoutchouc naturel.

5. Pneumatique à air pour véhicule comportant une bande de roulement dont au moins une partie consiste en une composition de caoutchouc vulcanisée au soufre selon l'une quelconque des revendications 1 à 4.
